**Europäisches Patentamt**

**European Patent Office**

**Office européen des brevets**

(11) Veröffentlichungsnummer: **0 122 218**

**B1**

(12) **EUROPÄISCHE PATENTSCHRIFT**

(45) Veröffentlichungstag der Patentschrift:
**08.06.88**

(21) Anmeldenummer: **84730032.4**

(22) Anmeldetag: **06.04.84**

(51) Int. Cl.⁴: **B 65 G 1/127,** B 65 G 1/06,
G 05 B 19/04, G 06 F 15/46

(54) **Steueranordnung für ein Umlaufregal.**

(30) Priorität: **09.04.83 DE 3312777**

(43) Veröffentlichungstag der Anmeldung:
**17.10.84 Patentblatt 84/42**

(45) Bekanntmachung des Hinweises auf die Patenterteilung:
**08.06.88 Patentblatt 88/23**

(84) Benannte Vertragsstaaten:
**AT BE CH DE FR GB IT LI NL SE**

(56) Entgegenhaltungen:
**DE-A-1 935 581**
**DE-A-3 042 205**
**GB-A-1 419 338**

(73) Patentinhaber: **Bellheimer Metallwerk GmbH,
D-6729 Bellheim/Pfalz (DE)**

(72) Erfinder: **Sauer, Hans- Peter, Maxburgring 1,
D-6729 Bellheim (DE)**

(74) Vertreter: **Böning, Manfred, Dr. Ing.,
Patentanwälte Dipl.- Ing. Dieter Jander Dr. Ing.
Manfred Böning Kurfürstendamm 66, D-1000
Berlin 15 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung bezieht sich auf eine Steueranordnung für ein Umlaufregal, welches im Verbund mit mindestens einem weiteren mit einer gleichen Steueranordnung versehenen Umlaufregal durch eine Datenverarbeitungsanlage steuerbar ist und über eine Vielzahl von durch ein Antriebssystem bewegbaren Trägern mit Ablageplätzen für Lagergut verfügt, wobei zur Steueranordnung eine erste Einrichtung zum Erfassen der Position der Träger, eine zweite Einrichtung zum Erfassen der Belegung der Ablageplätze und eine eine Datenendeinrichtung sowie eine Datenübertragungseinrichtung aufweisende Datenstation gehören, welch letztere über eine Empfangsleitung, eine Sendeleitung und eine Rückleitung mit der Datenstation der Steueranordnung des weiteren Umlaufregales und mit einer Datenstation der Datenverarbeitungsanlage verbindbar ist, wobei die Empfangsleitung an einen Signaleingang der Datenendeinrichtung, die Sendeleitung an einen Signalausgang der Datenübertragungseinrichtung und die Rückleitung an der Betriebserde der Datenstation anliegen.

Steueranordnungen dieser Art werden vornehmlich bei Großanlagen mit mehreren Umlaufregalen verwendet, wie sie beispielsweise in der Zeitschrift "Distribution", Heft 1-2/1983, Seiten 16 und 17 beschrieben sind.

Bei kleinen Umlaufregalen reicht ein verhältnismäßig einfaches Ordnungssystem (Karteikarten) aus, um zu wissen, welchem Platz ein bestimmtes Lagergut zugeordnet ist. Man kann dann manuell das Antriebssystem in Gang setzen, so lange, bis der gewünschte Träger vor dem Bedienungstisch steht. Bei Großanlagen hingegen kommt man jedoch ohne Unterstützung durch eine Datenverarbeitungsanlage nicht aus. Jedes zu lagernde Teil ist mit einer Kenn-Nummer versehen, und durch Eingabe dieser Kenn-Nummer in eine Eingabeeinheit erhält man von der Datenverarbeitungsanlage Angaben darüber, wo sich das betreffende Teil befindet oder wohin es gebracht werden muß. Jedem Umlaufregal ist daher eine Steueranordnung zuzuordnen, welche eine Datenstation enthält, die dann die von der Datenverarbeitungsanlage gelieferten Informationen auswertet, anzeigt, und das Antriebssystem veranlaßt, den ausgewiesenen Träger vor einen Bedienungstisch zu bewegen. Bei manchen Anlagen kann das Ausgeben oder Einziehen des Lagergutes sogar automatisch vorgenommen werden. Zumindest aber enthält die Datenstation eine Anzeigeeinheit, von der ablesbar ist, an welcher Position das gewünschte Lagergut zu finden ist. Dies können beispielsweise Koordinatenangaben sein oder eine über die gesamte Länge des Bedienungstisches reichende Anzeigeleiste.

In Normen sind bestimmte Begriffe festgelegt. So besagt beispielsweise DIN 44 302, daß eine Datenstation aus einer Datenendeinrichtung und einer Datenübertragungseinrichtung besteht. Die Datenendeinrichtung umfaßt im wesentlichen Eingabe-, Ausgabe-, Rechen- und Leitwerke sowie Speicher. Innerhalb der Datenendeinrichtung erfolgt die Übergabe von digitalen Daten in der Weise, daß Binärzeichen, aus denen sich ein Zeichen zusammensetzt, über eine entsprechende Anzahl von Schnittstellen-Leitungen jeweils gleichzeitig übergeben werden. Bei der 8-bit-Technik z. B. erfolgt demnach die Parallelübergabe über acht Schnittstellen-Leitungen. Die Datenübertragungseinrichtung hat im wesentlichen die Aufgabe, eine Verbindung mit einer anderen Datenstation herzustellen, welche mit erheblich weniger Leitungsaufwand auskommt. Dazu werden die digitalen Daten in der Weise übertragen, daß die Binärzeichen, aus denen sich ein Zeichen zusammensetzt, über eine Schnittstellenleitung nacheinander übergeben werden. Dies bezieht sich jeweils auf eine Übertragungsrichtung. Für eine Dialogverbindung ist demnach eine Sendeleitung und eine Empfangsleitung sowie eine gemeinsame Rückleitung erforderlich.

Die Verbindung einer Datenverarbeitungsanlage mit einer Steueranordnung der beschriebenen Art erfolgt dadurch, daß drei Leitungen zwischen der Datenstation der Steueranordnung sowie der entsprechenden Datenstation der Datenverarbeitungsanlage verlegt werden. Will man jedoch mehrere Steueranordnungen an eine Datenverarbeitungsanlage anschliessen, ist die Zwischenschaltung eines Multiplexers erforderlich. Ein derartiges Zusatzgerät verursacht erhebliche Mehrkosten, etwa in der Grössenordnung von DM 30.000,-. Hinzu kommt ein grösserer Installations- und Montageaufwand und eine vergrösserte Störanfälligkeit.

Aufgabe der Erfindung ist es, eine mit einer weiteren Steueranordnung und/oder einer Datenverarbeitungsanlage verbindbare Steueranordnung der in Betracht gezogenen Art zu schaffen, die kostengünstig ist, eines geringen Montage- und Installationsaufwandes sowie wenig Platzes bedarf und die sich bei niedrigem Stromverbrauch durch geringe Wärmeentwicklung auszeichnet. Sie soll außerdem betriebssicher und wenig störanfällig sein.

Diese Aufgabe wird bei einer Steueranordnung der eingangs beschriebenen Art dadurch gelöst, daß der Signalausgang der Datenübertragungseinrichtung einen Transistor ansteuert, der in einer Emitterschaltung mit hochohmigem Spannungspfad betrieben wird, und daß die Sendeleitung mit dem Emitter des Transistors verbunden ist.

Die Ansteuerung eines Transistors in der angegebenen Weise durch den Signalausgang erlaubt es, alle in entsprechender Weise ausgestatteten Anschlüsse mehrerer Datenübertragungseinrichtungen parallel zu schalten. Die Zwischenschaltung eines teuren Multiplexers ist dadurch nicht mehr nötig, und der mit der Zwischenschaltung verbundene Montage- und Installationsaufwand sowie der Platzbedarf, der Stromverbrauch und die Wärmeentwicklung entfallen. Vor allem werden die Betriebssicherheit erheblich erhöht und die Störanfälligkeit bedeutend verringert. Dies resultiert daraus, daß eine mehrfache Signalumsetzung, wie sie bei der Verwendung eines Multiplexers notwendig ist, sich erübrigt. Auch reduziert sich die Anzal der Übergabestellen und Schnittstellen drastisch.

Wenn bei der Zusammenschaltung mehrerer Steueranordnungen jeweils über zugehörige Eingabeeinheiten (z. B. Eingabetastatur) Mitteilungen oder Anfragen an eine zentrale Datenverarbeitungsanlage gerichtet werden sollen, dann muß die Datenstation einen Belegtsignal-Anschluß aufweisen, der in vorteilhafter Weise gemäß den Merkmalen des Anspruchs 4 ausgestaltet ist. Durch die über die Meldeleitung parallel verbundenen Belegtsignal-Anschlüsse wird sichergestellt, daß stets nur eine Datenübertragungseinrichtung Daten auf die Sendeleitung übergibt. Die angegebene Ausbildung erlaubt die Parallelverbindung ohne Zwischenschaltung eines Multiplexers.

In den Ansprüchen 7 bzw. 10 ist eine besonders zweckmässige Aufgliederung und Unterbringung der wesentlichsten Schaltelemente der Steueranordnung angegeben. Man kann, je nach Ausbaustufe einer Anlage, eine dritte Schaltplatine einsetzen, die entweder die im Anspruch 1 angegebene Ausbildung einer Datenübertragungseinrichtung aufweist oder aber bei der die dafür notwendigen Schaltelemente fehlen. Man kann also Steueranordnungen, die zunächst nur zum alleinigen Anschluß an eine Datenverarbeitungsanlage vorgesehen sind, jederzeit schnell und einfach umrüsten, einfach indem man die dritte Schaltplatine gegen eine entsprechende erweiterte austauscht. Durch diese einfache Maßnahme kann diese Steueranordnung mit entsprechend gleichartig ausgerüsteten Steueranordnungen parallel betrieben werden. Die Steueranordnung umfaßt in kompakter und übersichtlicher Anordnung alle wesentlichen Schaltungselemente einschließlich der Eingabeeinheit und der Anzeigeeinheit.

Die Erfindung wird nachfolgend anhand eines in der Zeichnung dargestellten, besonders bevorzugten Ausführungsbeispiels erläutert. Es zeigt:

Figur 1 eine Anordnung von zwei Umlaufregalen mit Steueranordnungen gemäß der Erfindung, zusammengeschaltet mit einer Datenverarbeitungsanlage in schematisch stark vereinfachter Darstellung,

Figur 2 ein Schaltschema einer Steueranordnung gemäß der Erfindung, wobei jedoch an sich bekannte Einzelheiten weggelassen bzw. schematisch vereinfacht dargestellt sind,

Figur 3 eine perspektivische Darstellung der Steueranordnung gemäß der Erfindung, ebenfalls zeichnerisch vereinfacht wiedergegeben.

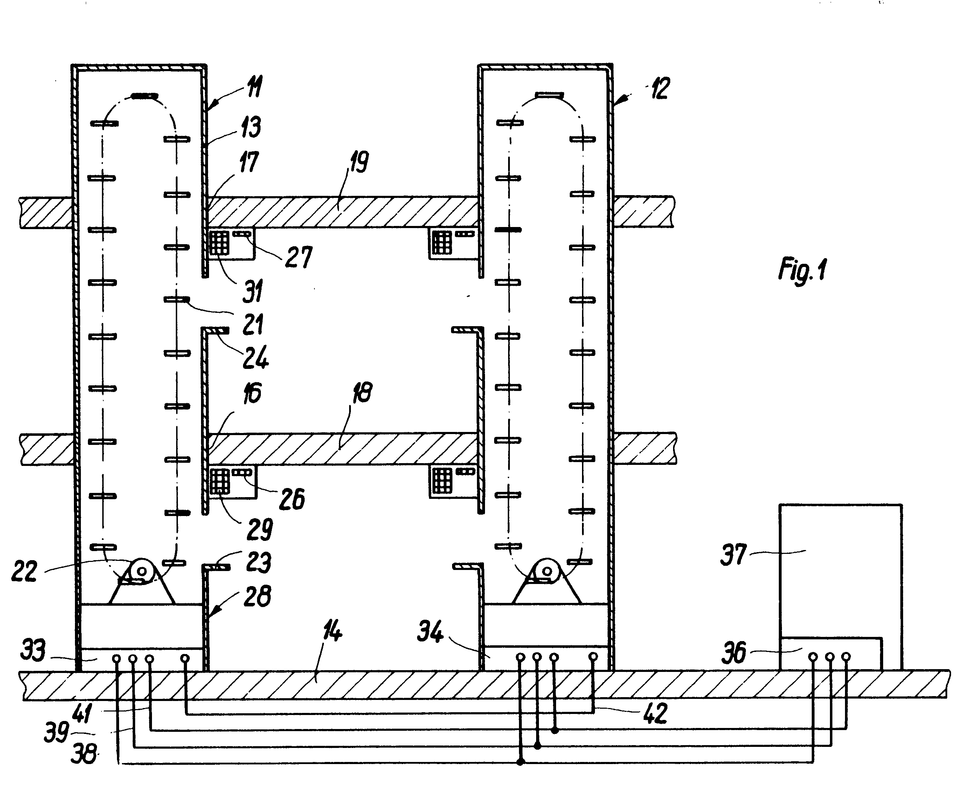

In Figur 1 sind schematisch stark vereinfacht zwei Umlaufregale 11 und 12 angedeutet. Beide Umlaufregale sind gleich aufgebaut, und es wird daher stellvertretend für beide nur das Umlaufregal 11 näher erläutert. Der Aufbau eines Umlaufregals ist an sich bekannt, und es sollen daher hier nur der Vollständigkeit halber die wesentlichsten Elemente angesprochen werden. Das Umlaufregal 11 besteht demnach im wesentlichen aus einem Gehäuse 13, welches auf einem Fundament 14 steht und sich über mehrere Stockwerke eines Gebäudes erstreckt, wobei es durch Deckenöffnungen 16 und 17 in Decken 18 und 19 ragt. Im Inneren des Gehäuses 13 sind mehrere Träger 21 beweglich gehalten. Die Träger 21 sind je nach Art des Lagergutes, welches sie halten sollen, ausgebildet. Ein Antriebssystem 22, welches beispielsweise einen Motor und eine Antriebskette umfaßt, dient dazu, einen jeweils gewünschten Träger 21 vor einen Bedienungstisch 23 oder 24 zu bewegen. Nicht dargestellt ist ein Lade-Entladesystem, welches ein Lagergut vom Bedienungstisch auf einen vorgebbaren Platz eines Trägers bewegt oder von dort auf den Bedienungstisch befördert. Solche Systeme sind an sich bekannt und sind nicht bei jeder Art von Lagergut brauchbar. Gleichsam als Bestandteil eines solchen Systems kann man eine Positionsanzeige 26 und 27 ansehen, welche zumindest die Position eines vorgegebenen Lagergutes optisch anzeigt. Aus Gründen der besseren Übersichtlichkeit ist in der Zeichnung eine Steueranordnung 28 im unteren Teil des Gehäuses 13 schematisch angedeutet. Diese Steueranordnung 28 umfaßt im wesentlichen eine nicht besonders dargestellte und an sich bekannte Einrichtung zur Erfassung der Position jedes Trägers 21 und eine zweite Einrichtung zur Erfassung der Platzbelegung auf den Trägern. Diese Erfassung kann entweder selbsttätig durch geeignete Fühlermechanismen erfolgen oder indem eine Bedienungsperson Angaben in eine Tastatur 29, 31 eingibt. Die Steueranordnung 28 enthält weiterhin eine Datenstation 33, die ihrerseits aus einer Datenendeinrichtung und einer Datenübertragungseinrichtung besteht. Es handelt sich hierbei um aus der Datenverarbeitung bestens bekannte Einheiten. Von der Datenstation 33 führt eine Sendeleitung 38 parallel zu gleichartigen Anschlüssen einer Datenstation 34 des zweiten Umlaufregales 12 und einer Datenstation 36 einer Datenverarbeitungsanlage 37. In gleicher Weise ist eine Empfangsleitung 39 parallel an alle gleichartigen Anschlüsse bei den anderen Datenstationen angeschlossen. Eine gemeinsame Rückleitung 41 verbindet ebenfalls alle gleichartigen Anschlüsse der vorgenannten Einrichtungen. Eine Meldeleitung 42 verbindet die gleichartigen Belegtsignal-Anschlüsse der Datenstationen 33 und 34.

Über die Tastaturen 29 und 31 und die Positionsanzeigen 26 und 27 kann man mit der Datenverarbeitungsanlage 37 in eine datenaustauschende Verbindung treten.

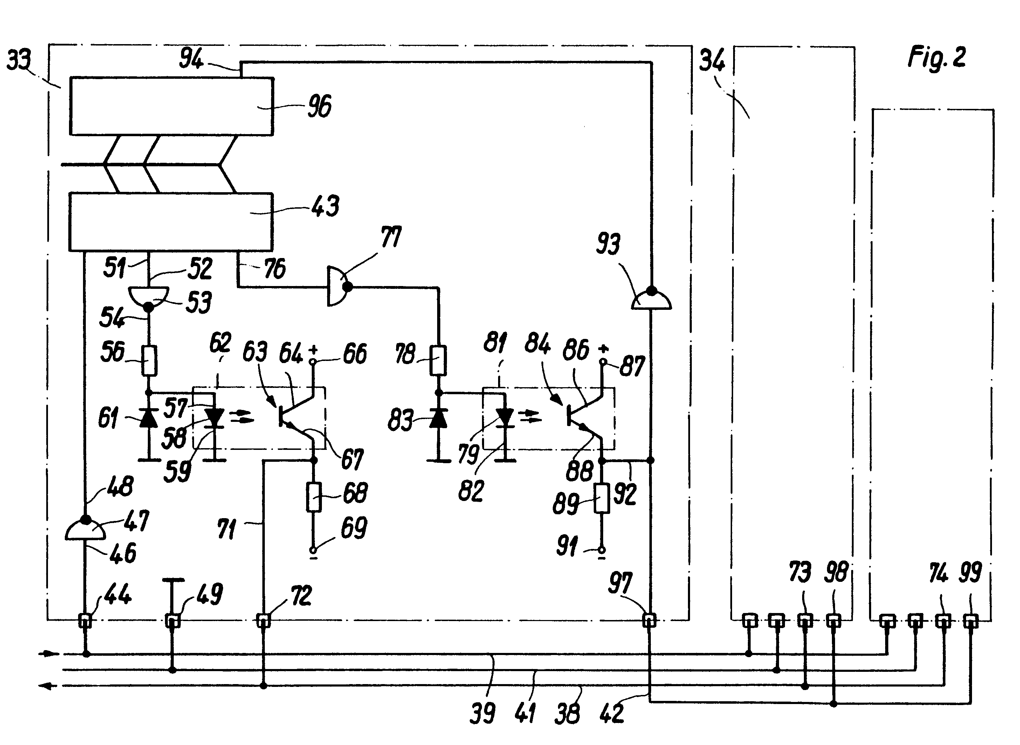

Die Figur 2 zeigt Einzelheiten der Datenstation 33. Sie verfügt über ein von einem Mikroprozessor gebildetes Schaltelement 43. Eine Empfangsleitung 39 führt über einen Stift 44 einer Steckerleiste an einen Anschluß 46 eines NAND-Gatters 47, dessen Ausgang 48 an das Schaltelement 43 angeschlossen ist. Die Rückleitung 41 führt über einen Stift 49 einer Steckerleiste auf eine Schaltplatine und wird dort in bekannter Weise mit allen die Betriebserde darstellenden Schaltpunkten verbunden.

Ein Signalausgang 51 des Schaltelementes 43 ist an einen Anschluß 52 eines NAND-Leistungstreibers 53 geführt. Dessen Ausgang 54 ist mit einer Seite eines Widerstandes 56 verbunden. Die andere Seite des Widerstandes 56 führt an einen Anschluß 57 einer lichtemittierenden Diode 58, die mit ihrem anderen Anschluß 59 mit der Betriebserde verbunden ist. Antiparallel zur Diode 58 ist eine Schutzdiode 61 geschaltet. 62 ist ein Optokoppler. In seinem Gehäuse befindet sich lichtdicht gegenüber der Umgebung abgeschlossen ein als Fototransistor ausgebildeter Transistor 63. Optokoppler dieser Art sind im Handel erhältlich. Der Kollektor 64 des npn-Transistors ist über einen Schaltpunkt 66 mit dem Pluspol einer Spannungsquelle von 12 Volt verbunden. Der Emitter 67 des Transistors 63 ist über einen Widerstand 68 mit einem Schaltpunkt 69 an ein Potential von -12 Volt angeschlossen. Der Widerstand 68 kann etwa 47 kOhm aufweisen. Der Transistor 63 wird damit in Emitterschaltung mit hochohmigem positiven Spannungspfad betrieben und stellt somit über eine Verbindung 71 und einen Stift 72 zur Sendeleitung 38 eine hochohmige Belastung dar. Bei Verwendung eines pnp-Transistors und umgekehrter Polarität der Betriebsspannung handelt es sich um eine Emitterschaltung mit hochohmigem negativen Spannungspfad.

Die Funktionsweise des Schaltelementes 43, seine Verbindung mit den übrigen Schaltelementen der Datenstation 33 sowie die Verarbeitung der über die Empfangsleitung 39 ankommenden Daten und die Abgabe entsprechender Datensignale am Signalausgang 51 erfolgt in bestens bekannter Weise. Entscheidend und neu sind die Verhältnisse auf der Sendeleitung 38. Wie schon in Figur 1 gezeigt, verbindet die Sendeleitung 38 gleichartige Signalausgänge. Dementsprechend führt sie an einen Stift 73 einer anderen Datenstation 34 und ebenfalls an einen gleichartigen Stift 74 einer weiteren schematisch angedeuteten Datenstation. Diese Signalausgänge sind so wie in der vorher beschriebenen Art an Optokoppler angeschlossen. Die Wirkungsweise ist nun wie folgt: Wenn am Signalausgang 51 ein H-Signal vorliegt, so kehrt der NAND-Leistungstreiber 53 dieses Signal um, und die Diode 58 bleibt stromlos. Der Transistor 63 ist dabei hochohmig, und am Stift 72 liegen über den Widerstand 68 -12 Volt an. In gleicher Weise sollen zunächst an den Stiften 73 und 74 ebenfalls -12 Volt anliegen. Wenn nun vom Schaltelement 43 aus Daten zur Datenverarbeitungsanlage gesendet werden, so bedeutet dies, daß das Signal am Signalausgang 51 zwischen H und L wechselt. Demgemäß liegt die Diode 58 abwechselnd an positiver oder negativer Spannung. In Intervallen positiver Spannung sendet sie Licht (vorwiegend im Infrarotbereich) aus, wodurch der Transistor 63 niederohmig wird. In diesem Zustand erzwingt er, daß das am Schaltpunkt 66 anliegende positive Potential auch am Stift 72 erscheint. Das Potential auf der Sendeleitung 38 wechselt damit im Rhythmus der Aussteuerung von +12 Volt auf -12 Volt. Zufolge der hochohmigen Schaltungen in den anderen Datenstationen kann dieser Potentialsprung ohne Kurzschlußeffekt stattfinden.

Daraus wird ersichtlich, daß jede Datenübertragungseinrichtung auf die Sendeleitung arbeiten kann. Natürlich muß verhindert werden, dass mehrere Stationen zugleich senden. Wenn das Antwort-Rückantwort-Spiel ausschließlich von einer zentralen Datenverarbeitungsanlage gesteuert wird, kann hierdurch die notwendige Disziplin vorgegeben werden. Wenn aber möglich sein soll, von jeder Steueranordnung her individuell auch Anfragen an die zentralen Datenverarbeitungsanlage zu richten, müssen die Datenstationen ein Belegt-Signal erhalten, welches sie in bestens bekannter Weise auswerten und dadurch sicherstellen, daß immer nur eine Station Signale aussendet.

Um auch hier ohne Zwischenschaltung eines Multiplexers auszukommen, ist ein Belegtsignal-Ausgang 76 des Schaltelementes 43 über einen der Anpassung dienenden NAND-Leistungstreiber 77 und einen Widerstand 78 an eine lichtemittierende Diode 79 eines weiteren Optokopplers 81 angeschlossen. Diese Diode 79 ist mit ihrem anderen Ende mit der Betriebserde verbunden. Eine Schutzdiode 83 ist ihr antiparallel geschaltet. Ein zugehöriger,ebenfalls als Fototransistor ausgebildeter Transistor 84 ist mit seinem Kollektor 86 an einen Schaltpunkt 87 geführt, an dem +12 Volt anliegen. Der Emitter 88 des Transistors 84 ist über einen Widerstand 89 mit einem Schaltpunkt 91 verbunden, an dem -12 Volt anliegen. Der Widerstand 89 weist 47 kOhm auf. Vom Emitter 88 führt eine Verbindungsleitung 92 über ein der Anpassung dienendes NAND-Gatter 93 an einen Belegtsignal-Eingang 94 eines zur Datenstation gehörigen weiteren, als Mikroprozessor ausgebildeten Schaltelementes 96. Die Verbindungsleitung 92 führt außerdem an einen von einem Stift gebildeten Belegtsignal-Anschluß 97, von dem aus die Meldeleitung 42 zu Belegtsignal-Anschlüssen 98 und 99 der anderen Datenstationen führt.

Die Funktionsweise dieses Schaltkreises ist wie folgt:

Wenn am Belegtsignal-Ausgang 76 ein H-Signal anliegt, sendet die Diode 79 kein Licht aus, und der Transistor 84 ist hochohmig. An der Meldeleitung 42 liegen dadurch -12 Volt an. Dieser Zustand wird über das NAND-Gatter 93 invertiert, und dessen Ausgangssignal zeigt dem Schaltelement 96 an, daß keine Datenstation sendet. In gleicher Weise wird der Leitungszustand in den anderen Datenstationen, beispielsweise in der Datenstation 34, ausgewertet. Sobald jedoch die Datenstation 33 beispielsweise Signale in der vorhin beschriebenen Art an die Sendeleitung 38 abgeben will, erzeugt das Schaltelement 43 an seinem Belegtsignal-Ausgang 76 ein L-Signal, welches durch den NAND-Leistungstreiber 77 in eine positive Spannung, beispielsweise 12 Volt, umgesetzt wird. Damit sendet die Diode 79 Licht aus, und der Transistor 84 wird niederohmig. Er erzwingt dadurch, daß jetzt die am Schaltpunkt 87 anliegende positive Spannung über die Verbindungsleitung 92 und den Belegtsignal-Anschluß 97 der Meldeleitung 42 aufgeprägt wird.

Ohne Kurzschlußeffekt läßt sich auch hier dieser Potentialsprung einstellen.

Die Auswertung des Belegtsignals durch das Schaltelement 96 erfolgt in allgemein bekannter Weise.

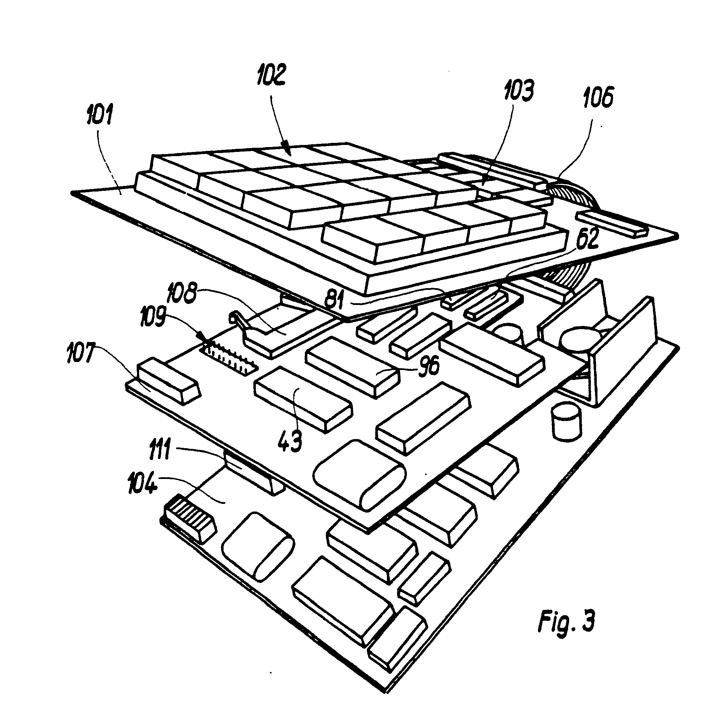

Eine besonders zweckmässige Unterbringung der Steueranordnung zeigt die Figur 3. Die Figur soll nur das Wesentlichste veranschaulichen und zeigt daher die einzelnen Schaltelemente schematisch stark vereinfacht. Auf einer ersten Schaltplatine 101 ist eine Eingabeeinheit 102 und eine optische Anzeigeeinheit 103 samt den zugehörigen Schaltkreisen untergebracht. Die elektrische Verbindung erfolgt in bekannter Weise an der Rückseite der Platine 101 durch aufgedruckte Leiterbahnen. Die Eingabeinheit 102 umfaßt im wesentlichen eine Tastatur und die Anzeigeeinheit 103 eine etwa fünfstellige Zifferanzeige. Damit kann man Positionskoordinaten darstellen, wobei in zeitlicher Aufeinanderfolge jeweils die momentan wichtigsten Daten angegeben werden, so beispielsweise zuerst die Trägernummer und die Position des gesuchten Lagergutes auf dem Träger, und danach die zu entnehmende Stückzahl oder die noch verbleibende Stückzahl.

Es ist weiterhin eine zweite Schaltplatine 104 vorhanden, welche im wesentlichen die Schaltkreise der Steuerlogik und der Datenendeinrichtung trägt. Die erste Schaltplatine 101 ist mit der zweiten Schaltplatine 104 über ein Vielfach-Flachkabel 106 verbunden. Zwischen diesen beiden Schaltplatinen befindet sich eine dritte Schaltplatine 107, welche im wesentlichen die Schaltkreise der Datenübertragungseinrichtung trägt. Zur Orientierung sind hier die Schaltelemente 43 und 96 sowie die Optokoppler 62 und 81 mit den entsprechenden Bezugszeichen versehen. An der dritten Schaltplatine 107 befindet sich eine Steckerleiste 108, in die eine nicht besonders dargestellte Federleiste eingesetzt werden kann, welche die Leitungen 38, 39, 41 und 42 heranführt. An der dritten Schaltplatine 107 ist weiterhin eine hier nur von der Lötseite aus sichtbare Steckerleiste 109 angebracht, deren Stifte in der Figur nach unten zur zweiten Schaltplatine 104 weisen und in eine dort angebrachte Federleiste 111 einsetzbar sind.

Diese explosionsartige Darstellung der Figur 3 dient der besseren Veranschaulichung. Im Einbauzustand sind alle drei Schaltplatinen in zueinander paralleler Lage und auf Abstand voneinander gehalten. Die dritte Schaltplatine 107 kann aber ohne große Schwierigkeiten ausgetauscht werden. Wenn beispielsweise eine Zusammenschaltung mehrerer Steueranordnungen nicht erforderlich ist, kann man eine Schaltplatine einsetzen, an der dann die nicht mehr notwendigen Schaltelemente fehlen. Fehlen würden dann etwa die beiden Optokoppler 62 und 81, das Schaltelement 96 und ein integriertes Schaltelement, welches mehrere, dann nicht erforderliche NAND-Gatter enthält.

Diese Betrachtung zeigt deutlich, daß der Mehraufwand, der notwendig ist, um mehrere Steueranordnungen parallel schalten zu können, praktisch kaum ins Gewicht fällt. Im gesamten Datenübertragungsweg ist immer nur eine Datenübertragungseinrichtung zu durchlaufen, nämlich die der sendenden Datenstation. Im Gegensatz dazu würde die Verwendung eines Multiplexers noch eine zusätzliche Datenübertragungseinrichtung in den Übertragungsweg einfügen. Die Erfindung reduziert also das Störungsrisiko erheblich.

Die Figur 3 zeigt in etwa maßstäblicher Grösse die Zusammenfassung einer Tastatur und einer Anzeigeeinheit mit praktisch den wesentlichsten Schaltelementen einer Steueranordnung. Lediglich die Leistungssteuerung für das Antriebssystem wird man zweckmässigerweise separat unterbringen. Aufgrund der Figur 3 wird ersichtlich, daß die schematische Verteilung gemäß Fig. 1 überwiegend nur den Zweck hatte, die Leitungsführung in zeichnerisch übersichtlicher Weise darstellen zu können.

Die beschriebene Steueranordnung ermöglicht es auch, beispielsweise zwei oder drei Steueranordnungen ohne Einbeziehung einer Datenverarbeitungsanlage miteinander zu koppeln. Eine solche Anordnung ist nicht besonders dargestellt, da man sie ohne weiteres durch Weglassen der Datenverarbeitungsanlage erhält. Maßgeblich für einen derartigen Betrieb ist, daß die Träger der einzelnen Umlaufregale fortlaufend durchnumeriert werden, was bei der Kodierung der Teilepositionen zu berücksichtigen ist. Ein Umlaufregal wirkt sozusagen als Fortsetzung des vorhergehenden, lediglich räumlich verlagert.

Im zuvor erläuterten System wählt die Datenverarbeitungsanlage aus der Vielzahl der angeschlossenen Umlaufregale immer jeweils eines an, und es versteht sich daher, daß die Kodenummer jedes Lagergutes nicht nur angibt, auf welcher Position welchen Trägers es zu finden ist, sondern auch, welchem Umlaufregal es zugeordnet ist. Die Datenverarbeitungsanlage sendet also zunächst die Kenn-Nummer des betreffenden Umlaufregals aus. Jede Datenendeinrichtung des Systems muß also so programmiert sein, daß sie ihre eigene Kenn-Nummer erkennt und dann der Datenverarbeitungsanlage ihre Bereitschaft zum weiteren Datenaustausch anzeigt.

**Patentansprüche**

1. Steueranordnung (28) für ein Umlaufregal (11), welches im Verbund mit mindestens einem weiteren mit einer gleichen Steueranordnung versehenen Umlaufregal (12) durch eine Datenverarbeitungsanlage (37) steuerbar ist und über eine Vielzahl von durch ein Antriebssystem bewegbaren Trägern (21) mit Ablageplätzen für Lagergut verfügt, wobei zur Steueranordnung eine erste Einrichtung zum Erfassen der Position der Träger (21), eine zweite Einrichtung zum Erfassen der Belegung der Ablageplätze und eine eine Datenendeinrichtung sowie eine Datenübertragungseinrichtung aufweisende Datenstation (33) gehören, welch letztere über eine Empfangsleitung (39), eine Sendeleitung (38) und eine Rückleitung (41) mit der Datenstation (34) der Steueranordnung des weiteren Umlaufregales (12) und mit einer Datenstation (36) der Datenverarbeitungsanlage (37) verbindbar ist, wobei die Empfangsleitung (39) an einem Signaleingang der Datenendeinrichtung, die Sendeleitung (38) an einem Signalausgang (51) der Datenübertragungseinrichtung und die Rückleitung (41) an der Betriebserde der Datenstation (33) anliegen, dadurch gekennzeichnet, daß der Signalausgang (51) der Datenübertragungseinrichtung einen Transistor (63) ansteuert, der in einer Emitterschaltung mit hochohmigem Spannungspfad betrieben wird, und daß die Sendeleitung (38) mit dem Emitter (67) des Transistors (63) verbunden ist.

2. Steueranordnung nach Anspruch 1, dadurch gekennzeichnet, daß der mit der Sendeleitung (38) verbindbare Transistor (63) Bestandteil eines Optokopplers (62) mit einer Licht emittierenden Diode (58) ist, die an dem Signalausgang (51) angeschlossen ist.

3. Steueranordnung nach Anspruch 2, dadurch gekennzeichnet, daß der Signal-Ausgang (51) über einen NAND-Leistungstreiber (53) an die lichtemittierende Diode (58) angeschlossen ist.

4. Steueranordnung nach einem der Ansprüche 1 bis 3, dadurch gekennzeichnet, daß die Datenstation (33) einen Belegtsignal-Anschluß (97) aufweist, der über eine Verbindungsleitung (92) an einen Belegtsignal-Eingang (94) eines Schaltelementes (96) und an den Emitter (88) eines Transistors (84) angeschlossen ist, der in einer Emitterschaltung mit hochohmigem Spannungspfad betrieben wird und von einem Belegtsignal-Ausgang (76) eines weiteren Schaltelementes (43) der Datenstation angesteuert wird, wobei der Belegtsignal-Anschluß (97) über eine Meldeleitung (42) mit wenigstens einem gleichartigen Belegtsignal-Anschluß (98) einer anderen Datenstation (34) verbindbar ist.

5. Steueranordnung nach Anspruch 4, dadurch gekennzeichnet, daß der mit der Meldeleitung (42) verbindbare Transistor (84) Bestandteil eines Optokopplers (62) mit einer lichtemittierenden Diode (79) ist, die an den Belegtsignal-Ausgang (76) angeschlossen ist.

6. Steueranordnung nach Anspruch 5, dadurch gekennzeichnet, daß der Belegtsignal-Ausgang (76) über einen NAND-Leistungstreiber (77) an die lichtemittierende Diode (79) angeschlossen ist.

7. Steueranordnung nach einem der Ansprüche 1 bis 6, dadurch gekennzeichnet, daß sie drei Schaltplatinen (101, 104, 107) aufweist, von denen die erste (101) und die zweite (104) über ein Vielfachflachkabel (106) miteinander verbunden sind und von denen die dritte (107) mit einer Steckerleiste (108) mit Stiften versehen ist, die in eine korrespondierende Federleiste (111) an der zweiten (104) einsetzbar sind.

8. Steueranordnung nach Anspruch 7, dadurch gekennzeichnet, daß die erste Schaltplatine (101) eine Eingabeeinheit (102) und eine optische Anzeigeeinheit (103) sowie zugehörige Schaltkreise, die zweite Schaltplatine (104) Schaltkreise der Steuerlogik und der Datenendeinrichtung und die dritte Schaltplatine (107) Schaltkreise der Datenübertragungseinrichtung trägt.

9. Steueranordnung nach Anspruch 6 oder 7, dadurch gekennzeichnet, daß an der dritten Schaltplatine (107) eine Federleiste einsetzbar ist, welche die Leitungen (38, 39, 41, 42) zu anderen Datenstationen (34) heranführt.

10. Steueranordnung nach einem der Ansprüche 7 bis 9, dadurch gekennzeichnet, daß die drei Schaltplatinen (101, 104, 107) in zueinander paralleler Lage auf Abstand voneinander gehalten sind, wobei die dritte Schaltplatine (107) zwischen der ersten Schaltplatine (101) und zweiten Schaltplatine (104) liegt.

**Claims**

1. Control arrangement (28) for a system of circulating shelving (11) which, in conjunction with at least one other system of circulating shelving (12) provided with an identical control arrangement, is controllable by a data processing system (37) and is provided with storage places for stored goods in the form of a multiplicity of carriers (21) moveable by a drive system, the control arrangement being allocated a first device for detecting the position. of the carriers (21), a second device for detecting the occupancy of the storage places and a data station (33) provided with a data terminal and a data transmission device, the data station being connectable via a receive line (39), a transmit line (38) and a return line (41) to the data station (34) of the control arrangement of the other system of circulating shelving (12) and to a data station (36) of the data processing system (37), with the receive line (39) connected to a signal input of the data terminal, the transmit line (38) to a signal output (51) of the data transmission device and the return line (41) to the system earth of the data station (33), characterised in that the signal output (51) of the data transmission device drives a transistor (63) which is operated in an emitter circuit having a high-resistance voltage path and that the transmit line (38) is connected to the emitter (67) of the transistor (63).

2. Control arrangement according to Claim 1, characterised in that the transistor (63) which can be connected to the transmit line (38) is a component of an optical coupler (62) having a light-emitting diode (58) which is connected to the signal output (51).

3. Control arrangement according to Claim 2, characterised in that the signal output (51) is connected via a NAND power driver (53) to the light-emitting diode (58).

4. Control arrangement according to one of Claims 1 to 3, characterised in that the data station (33) is provided with a busy-signal connection (97) which is connected via a connecting line (92) to a busy-signal input (94) of a circuit element (96) and to the emitter (88) of a transistor (84) which is operated in an emitter circuit having a high-resistance voltage path and is driven by a busy-signal output (76) of another circuit element (43) of the data station, in which arrangement it is possible for the busy-signal connection (97) to be connected via a record line (42) to at least one similar busy-signal connection (98) of another data station (34).

5. Control arrangement according to Claim 4, characterised in that the transistor (84) which can be connected to the record line (42) is a component of an optical coupler (62) having a light-emitting diode (79) which is connected to the busy-signal output (76).

6. Control arrangement according to Claim 5, characterised in that the busy-signal output (76) is connected via a NAND power driver (77) to the light-emitting diode (79).

7. Control arrangement according to one of Claims 1 to 6, characterised in that it is provided with three circuit boards (101, 104, 107) of which the first (101) and the second (104) are connected to each other via a multiple ribbon cable (106) and of which the third (107) is provided with a connector strip (108) having pins which can be inserted into a corresponding female multipoint connector (111) on the second (104) circuit board.

8. Control arrangement according to Claim 7, characterised in that the first circuit board (101) carries an input unit (102) and an optical display unit (103) and associated circuits, the second circuit board (104) carries circuits of the control logic and the data terminal and the third circuit board (107) carries circuits of the data transmission device.

9. Control arrangement according to Claim 6 or 7, characterised in that at the third circuit board (107) a female multipoint connector is insertable which brings the lines (38, 39, 41, 42) to other data stations (34).

10. Control arrangement according to one of Claims 7 to 9, characterised in that the three circuit boards (101, 104, 107) are kept parallel to each other and apart from each other, the third circuit board (107) being located between the first circuit board (101) and the second circuit board (104).

## Revendications

1. Dispositif de commande (28) pour un rayonnage à circulation (11), qui peut être commandé, en combinaison avec au moins un autre rayonnage a circulation (12) comportant un dispositif de commande identique, par une installation (37) de traitement de données et dispose d'une multiplicité de supports (21) qui peuvent être deplacés par un système d'entraînement ,et comporte des emplacements de réception pour un produit a stocker, et dans lequel le dispositif de commande inclut un premier dispositif servant à détecter la position des supports (21), un second dispositif servant à détecter l'occupation des emplacements de réception et un poste (33) de traitement des données comportant un dispositif terminal de traitement de données ainsi qu'un dispositif de transmission de données et pouvant être relié par l'intermédiaire d'une ligne de réception (39), d'une ligne d'émission (38) et d'une ligne de retour (41) à un poste (34) de traitement de données du dispositif de commande de l'autre rayonnage à circulation (12), et à un poste (36) de traitement de données de l'installation (37) de traitement de données, et dans lequel la ligne de réception (39) est reliée à une entrée des signaux du dispositif terminal de traitement de données, la ligne d'émission (38) est reliée a une sortie (51) des signaux du dispositif de transmission de données et la ligne de retour (41) est reliée à la terre de service du poste (33) de traitement de données, caractérisé en ce que la sortie (51) des signaux du dispositif de traitement de données commande un transistor (63) qui fonctionne selon un montage en émetteur commun avec une voie d'application de la tension, présentant une forte valeur ohmique, et que la ligne d'émission (38) est reliée à l'émetteur (67) du transistor (63).

2. Dispositif de commande selon la revendication 1, caractérisé en ce que le transistor (63), qui peut être relié à la ligne d'émission (38), fait partie d'un optocoupleur (62) comportant une diode photoémissive (58), qui est relié à la sortie (51) des signaux.

3. Dispositif de commande selon la revendication 2, caractérisé en ce que la sortie (51) des signaux est reliée par l'intermédiaire d'un étage d'attaque de puissance NON-ET (53) à la diode photoémissive (58).

4. Dispositif de commande selon l'une des revendications 1 a 3, caractérisé en ce que le poste (33) de traitement de données comporte une borne (97) de transmission des signaux d'occupation, qui est reliée par l'intermédiaire d'une ligne de liaison (92) à une entrée (94) du signal d'occupation d'un élément de commutation (96) et à l'émetteur (88) d'un transistor (84), qui fonctionne selon un montage en émetteur commun avec une voie d'application de la tension, présentant une forte valeur ohmique, et est commandé par une sortie (76) du signal d'occupation d'un autre élément de commutation (43) du poste de traitement de données, la borne (97) de transmission du signal d'occupation pouvant être raccordée par l'intermédiaire d'une ligne de transmission (42) à au moins une borne identique (98) de transmission du signal d'occupation d'un autre poste (34) de traitement de données.

5. Dispositif de commande selon la revendication 4, caractérisé en ce que le transistor (84), qui peut être relié à la ligne de transmission (42), fait partie d'un optocoupleur (62) comportant une diode photoémissive (79), qui est raccordée à la sortie (76) du signal d'occupation.

6. Dispositif de commande selon la revendication 5, caractérisé en ce que la sortie (76) du signal d'occupation est relié par l'intermédiaire d'un étage d'attaque de puissance NON-ET (77) à la diode photoémissive (79).

7. Dispositif de commande selon l'une des revendications 1 à 6, caractérisé en ce qu'il comporte trois plaquettes (101, 104, 107) de circuits intégrés, parmi lesquelles la première plaquette (101) et la seconde plaquette (104) peuvent être reliées entre elles par l'intermédiaire d'un câble plat multiple (106),alors que la troisième (107) comporte une barrette de connexion (108) comportant des broches, qui peuvent être enfichées dans une barrette à ressorts correspondante (111) située sur la seconde plaquette (104).

8. Dispositif de commande selon la revendication 7, caractérisé en ce que la première plaquette ( 101) équipée de circuits porte une unité d'entrée (102) et une unité d'affichage optique (103) ainsi que des circuits associés, que la seconde plaquette (104) équipée de circuits porte des circuits du système logique de commande et du dispositif terminal de traitement de données et que la troisième plaquette (107) de circuits imprimés porte des circuits du dispositif de transmission de données.

9. Dispositif de commande selon la revendication 6 ou 7, caractérisé en ce que sur la troisième plaquette (107) de circuits imprimés, on peut installer une barrette à ressorts, qui relie les lignes (38, 39, 41, 42) à d'autres postes (34) de traitement de données.

10. Dispositif de commande selon l'une des revendications 7 à 9, caractérisé en ce que les trois plaquettes (101, 104, 107) de circuits imprimés sont disposées parallèlement et à distance les unes des autres, la troisième plaquette (107) de circuits imprimés étant située entre la première plaquette (101) de circuits imprimés et la seconde platine (104) plaquette de circuits imprimés.

Fig.1

0 122 218

Fig. 2

0 122 218

Fig. 3